(19) Europäisches Patentamt
European Patent Office
Office européen des brevets

(11) EP 2 041 207 B1

(12) FASCICULE DE BREVET EUROPEEN

(45) Date de publication et mention de la délivrance du brevet:
**23.11.2011 Bulletin 2011/47**

(21) Numéro de dépôt: **07764941.6**

(22) Date de dépôt: **29.06.2007**

(51) Int Cl.:
***C08J 3/22*** *(2006.01)* ***C08F 212/08*** *(2006.01)*

(86) Numéro de dépôt international:
**PCT/EP2007/005771**

(87) Numéro de publication internationale:
**WO 2008/003434 (10.01.2008 Gazette 2008/02)**

# (54) NANOPARTICULES DE POLYMERE VINYLIQUE FONCTIONNALISE

NANOPARTIKEL AUS FUNKTIONALISIERTEM VINYLPOLYMER

FUNCTIONALIZED VINYL POLYMER NANOPARTICLES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **06.07.2006 FR 0606168**

(43) Date de publication de la demande:
**01.04.2009 Bulletin 2009/14**

(73) Titulaires:
- **Société de Technologie Michelin 63000 Clermont-Ferrand (FR)**
- **Michelin Recherche et Technique S.A. 1763 Granges-Paccot (CH)**

(72) Inventeurs:
- **GANDON-PAIN, Sylvie F-63100 Clermont-Ferrand (FR)**
- **HUT, Alain F-63670 Le Cendre (FR)**

(74) Mandataire: **Ribière, Joel**
**M.F.P. Michelin,**
**SGD/LG/PI - F35 - Ladoux**
**23, place des Carmes-Déchaux**
**63040 Clermont-Ferrand Cedex 9 (FR)**

(56) Documents cités:
**EP-A- 1 057 622 EP-A- 1 116 580**
**EP-A- 1 475 232**

- **EELTINK ET AL: "Performance limits of monolithic and packed capillary columns in high-performance liquid chromatography and capillary electrochromatography" JOURNAL OF CHROMATOGRAPHY A, ELSEVIER, AMSTERDAM, NL, vol. 1104, no. 1-2, 3 février 2006 (2006-02-03), pages 256-262, XP005252214 ISSN: 0021-9673**
- **BERRIOT J ET AL: "Reinforcement of model filled elastomers: experimental and theoretical approach of swelling properties" POLYMER, ELSEVIER SCIENCE PUBLISHERS B.V, GB, vol. 43, no. 23, 2002, pages 6131-6138, XP004383557 ISSN: 0032-3861**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention est relative aux charges renforçantes susceptibles de renforcer des matrices ou compositions polymériques, plus particulièrement aux charges renforçantes du type organique ainsi qu'à leur utilisation pour renforcer de telles matrices, notamment des matrices élastomériques entrant dans la fabrication des pneumatiques pour véhicules automobiles.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé, ainsi qu'une bonne résistance à l'usure. Une solution efficace à ce problème a été trouvée, au cours des quinze dernières années, grâce à la mise au point de nouvelles charges du type inorganiques, véritablement renforçantes, encore connues sous le nom de "*non-black fillers*", tout particulièrement des silices hautement dispersibles (HDS pour "*Highly Dispersible Silica*"), qui se sont révélées capables de remplacer dans leur fonction de charge renforçante les noirs de carbone conventionnels pour pneumatiques.

Toutefois, ces charges inorganiques renforçantes, en raison d'une densité légèrement supérieure pour un pouvoir renforçant équivalent, présentent l'inconvénient connu d'augmenter le poids des matrices polymériques qu'elles renforcent, comparativement à l'emploi de noir de carbone, ce qui est plutôt antinomique d'un autre objectif plus général qui est celui d'allègement des pneumatiques et donc des véhicules les comportant.

Poursuivant leurs recherches, les Demanderesses ont découvert certaines charges organiques de synthèse qui, de manière inattendue, peuvent être utilisées comme de véritables charges renforçantes, c'est-à-dire sont capables de remplacer des noirs de carbone conventionnels pour pneumatiques tout comme des silices HDS.

Ces nouvelles charges organiques de synthèse, grâce à une densité environ deux fois moindre, permettent de réduire de manière très significative le poids des matrices polymériques qu'elles renforcent et celui des articles en polymère les contenant, notamment les articles en caoutchouc tels que pneumatiques, ceci sans compromis sur les propriétés d'usage de ces articles.

En conséquence, un premier objet de l'invention concerne des nanoparticules de polymère vinylique fonctionnalisé et réticulé, utilisables notamment comme charge renforçante dans une matrice polymérique, caractérisées en ce que ledit polymère vinylique est un copolymère d'au moins les monomères suivants, tous copolymérisables par polymérisation par voie radicalaire :

- un monomère "A" vinylique non aromatique ;
- un monomère "B" porteur d'une fonction notée Z de formule ≡ Si - X, X représentant un groupe hydroxyle ou hydrolysable ;
- un monomère "C" réticulant c'est-à-dire au moins bifonctionnel du point de vue de ladite polymérisation.

L'invention a également pour objet l'utilisation de nanoparticules selon l'invention pour le renforcement d'une matrice polymérique, notamment élastomérique.

L'invention a particulièrement pour objet l'utilisation de nanoparticules selon l'invention pour le renforcement d'articles finis ou produits semi-finis en caoutchouc, ces articles ou produits semi-finis étant notamment destinés à tout système de liaison au sol des véhicules automobiles, tels que pneumatiques, appuis internes de sécurité pour pneumatiques, roues, ressorts en caoutchouc, articulations élastomériques, autres éléments de suspension et anti-vibratoire.

L'invention a tout particulièrement pour objet l'utilisation de nanoparticules selon l'invention pour le renforcement de pneumatiques.

L'invention a également pour objet un masterbatch comportant des nanoparticules selon l'invention, noyées dans une matrice polymérique, notamment élastomérique.

L'invention a également pour objet une composition polymérique comportant au moins un polymère, notamment élastomère, des nanoparticules selon l'invention et un agent de couplage assurant la liaison entre le polymère et la surface des nanoparticules.

L'invention ainsi que ses avantages seront aisément compris à la lumière de la description et des exemples de réalisation qui suivent, ainsi que de la figure qui représente un cliché de microscopie électronique (MET) réalisé sur un échantillon de nanoparticules de PV en émulsion aqueuse, conformes à l'invention (Fig.1).

### I. MESURES ET TESTS UTILISES

#### I-1. Caractérisation de la charge polyvinylique

La charge de polymère vinylique (en abrégé, "PV") décrite ci-après consiste en des "nanoparticules", c'est-à-dire des particules dont la dimension principale (diamètre ou longueur) est typiquement inférieure au micromètre, généralement comprise dans un intervalle de l'ordre d'une dizaine de nanomètres à une centaine ou quelques centaines de nanomètres.

Ces nanoparticules de PV se présentent sous forme de particules élémentaires (ou "particules primaires"), ces particules élémentaires ou nanoparticules pouvant former des agrégats (ou "particules secondaires") d'au moins deux de ces nanoparticules, lesdits nanoparticules et/ou agrégats pouvant éventuellement former à leur tour des agglomérats susceptibles de se désagglomérer en ces nanoparticules et/ou agrégats sous l'effet d'une force externe, par exemple sous l'action d'un travail mécanique.

Ces nanoparticules sont caractérisées au microscope électronique à transmission (MET), comme indiqué ci-après.

A) Caractérisation en émulsion (latex):

Le latex de charge PV, au préalable dilué à l'eau (par exemple à 8 g de charge par litre d'eau) est dilué environ 50 fois dans l'isopropanol. 40 ml de la solution ainsi obtenus sont versés dans un bécher de forme haute (50 ml), puis dispersés à l'aide d'une sonde ultrasons de 600 W (sonde Vibracells, référence 72412, commercialisée par Bioblock Scientific), sous une puissance de 100%, pendant 8 min en mode pulsé (1s ON/ 1s OFF). Une goutte de la solution ainsi obtenue est alors déposée sur une grille de microscopie en cuivre à membrane de carbone, puis observée sous MET ("CM 200" commercialisé par FEI, tension d'accélération 200 kV) équipé d'une caméra (caméra MegaView II commercialisée par Soft Imaging System) et d'un système d'analyse d'image (AnalySIS Pro A version 3.0 de Soft Imaging System).

Les conditions de réglage du MET sont optimisées de manière connue, en fonction de l'échantillon et de l'état de vieillissement du filament (typiquement, diaphragme condenseur 2 (50 μm de diamètre) - objectif 3 (40 μm de diamètre)). Le taux de grandissement du microscope est adapté pour avoir une résolution suffisante sur les nanoparticules. Par exemple, un grandissement de 65000 correspond à une résolution voisine de 0,96 nm/pixel, sur une image numérique de 1248x1024 pixels ; une telle résolution permet par exemple la définition d'une nanoparticule sphérique de 40 nm de diamètre avec plus de 1000 pixels. La calibration de la caméra est réalisée de manière conventionnelle à l'aide d'étalons (à faible grandissement, un réseau en or de 2160 lignes/mm ; à fort grandissement, des billes d'or de diamètre 0,235 nm).

Le diamètre des nanoparticules est mesuré à l'aide du logiciel AnalySIS Pro A version 3.0 (avec option "Cercle" du menu "Mesure"). Pour chaque image et pour une nanoparticule donnée, l'opérateur matérialise à l'écran (à l'aide de la souris) trois points situés en périphérie de l'image de la nanoparticule. Le logiciel trace alors automatiquement le cercle qui passe par ces trois points et stocke dans un fichier (Excel) les valeurs de l'aire circulaire, du périmètre circulaire et du diamètre circulaire de la nanoparticule. Cette opération n'étant possible que pour les nanoparticules dont les contours sont bien délimités, sont exclues de la mesure les nanoparticules présentes dans des agglomérats. L'expérience est répétée au minimum sur 2000 nanoparticules représentatives de l'échantillon (issues d'au moins 10 images différentes, typiquement 50).

B) Caractérisation en composition de caoutchouc:

Les échantillons de charge PV en composition de caoutchouc vulcanisée, sont préparés de manière connue par ultracryomicrotomie (voir par exemple L. Sawyer and D. Grubb, *Polymer Microscopy*, p. 92, Chapman and Hall).

L'appareil utilisé ici est un ultracryomicrotome Leica ("EMFCS") équipé d'un couteau diamant. L'échantillon est découpé sous la forme d'une pyramide tronquée à base rectangulaire, la face tronquée à partir de laquelle seront réalisées les coupes mesurant moins de 600 μm de côté. Cette pyramide tronquée est maintenue fermement pendant la découpe. L'échantillon est refroidi à une température adaptée (proche de la température de transition vitreuse de l'échantillon) pour qu'il soit suffisamment dur pour permettre la coupe, la température du couteau étant typiquement voisine de celle de l'échantillon. La vitesse et l'épaisseur de coupe (telles qu'affichées par l'appareillage) sont préférentiellement comprises entre 1 et 2 mm/s et entre 20 et 30 nm, respectivement. A l'aide d'une goutte de solution aqueuse de saccharose (40 g dans 40 ml d'eau), les coupes sont récupérées dans l'enceinte de l'ultracryomicrotome puis déposées sur une grille de MET, à température ambiante. Le saccharose est ensuite éliminé en déposant la grille à la surface d'un cristallisoir rempli d'eau distillée.

Pour augmenter le contraste, les coupes peuvent subir une étape de coloration avec du tétra-oxyde d'osmium ($OsO_4$), selon un procédé bien connu de l'homme du métier (L. C. Sawyer et David Grubb, Polymer Microscopy, Chapman and Hall, London, New York, 1987, pp. 97-98) : les grilles sont placées au dessus d'un cristallisoir ouvert contenant un mélange de 20 ml d'eau distillée et de 0,1 g de $OsO_4$ (Agar Scientific, référence R1015) ; l'ensemble, placé au sein d'un dessiccateur étanche, est chauffé au bain-marie à 50°C pendant 3h à 3h30.

Les coupes sont observées sur microscope CM 200 (tension 200 kV). Pour optimiser le contraste, les observations sont réalisées en imagerie filtrée en énergie classique (fenêtre en énergie ΔE égale à environ 15 eV), avec un

système d'imagerie GIF (Gatan Imaging Filter) et les logiciels associés (Filter Control et Digital Micrograph 3.4).

## II. DESCRIPTION DETAILLEE DE L'INVENTION

Dans la présente description, sauf indication expresse différente, tous les pourcentages (%) indiqués sont des % en masse.

### II-1. Nanoparticules de polymère vinylique

Les nanoparticules de l'invention ont pour caractéristique essentielle d'être constituées d'un polymère vinylique fonctionnalisé et réticulé, ledit polymère vinylique (en abrégé "PV") étant un copolymère d'au moins les monomères suivants, tous copolymérisables par polymérisation par voie radicalaire :

o un monomère "A" vinylique non aromatique ;
o un monomère "B" porteur d'une fonction notée Z de formule (I) :

$$\equiv Si - X,$$

dans laquelle X représente un groupe hydroxyle ou un groupe monovalent hydrolysable ;
o un monomère "C" réticulant c'est-à-dire au moins bifonctionnel du point de vue de ladite polymérisation.

Dans la présente demande, on entend par définition :

- par "monomère vinylique", tout monomère porteur d'au moins un groupement vinyle ($CH_2 = CH$ -) ou (forme substituée) groupement vinylidène ($CH_2 = C$<) ;
- par "monomère vinylique non aromatique", tout monomère vinylique autre qu'un monomère de type vinylaromatique c'est-à-dire substitué en alpha par un groupe aromatique.

De préférence, le PV ci-dessus est un copolymère dont les monomères sont exclusivement vinyliques ou dont la fraction pondérale majoritaire des monomères (de préférence égale ou supérieure à 50%, plus préférentiellement égale ou supérieure à 70%) est constituée de monomères vinyliques (la fraction minoritaire pouvant être issue d'un ou plusieurs monomère(s) autres que vinyliques).

Ces définitions étant données, l'homme du métier comprendra immédiatement que le monomère C, pour pouvoir être apte à réticuler le PV, doit être au moins bifonctionnel c'est-à-dire porteur d'au moins deux fonctions polymérisables par voie radicalaire, contrairement aux monomères A et B qui doivent, du point de vue de la polymérisation, être au moins monofonctionnels c'est-à-dire porteurs d'au moins une fonction polymérisable par voie radicalaire.

Toutefois, la présente invention n'est pas limitée aux cas de monomères A et B monofonctionnels du point de vue de la polymérisation, chacun d'entre eux pouvant comporter plus d'une fonction polymérisable par voie radicalaire. Ainsi, dans le cas particulier d'un monomère A ou monomère B bifonctionnel (cas par exemple des di(méth)acrylates ou di(méth)acrylamides décrits ultérieurement), ces derniers pourraient aussi, selon un mode de réalisation particulier de l'invention, remplir la fonction réticulante du monomère C.

La fonctionnalisation Z du PV est apportée par le monomère B. Le taux molaire de ce monomère B est de préférence supérieur à 5%, notamment compris entre 5 et 30%, en particulier compris entre 5 et 20%.

L'homme de métier comprendra aisément à la lecture de la formule (I) ci-dessus qu'il existe au moins un et au plus trois groupe(s) X, hydroxyle ou groupe(s) monovalent(s) hydrolysable(s), relié(s) au PV via l'atome de silicium tétravalent.

De préférence, X est un halogène, notamment le chlore, ou X répond à la formule OR dans laquelle O est l'oxygène et R représente l'hydrogène ou un groupe hydrocarboné monovalent, linéaire ou ramifié, comportant de préférence de 1 à 15 atomes de carbone.

Conviennent plus particulièrement des fonctions Z choisies parmi les fonctions dites "hydroxysilyle" (≡Si-OH) ou "alkoxysilyle" (≡Si-OR'), R' étant un radical hydrocarboné monovalent comportant de préférence de 1 à 15 atomes de carbone, plus préférentiellement choisi parmi les alkyles, alkoxyalkyles, cycloalkyles et aryles, en particulier parmi les alkyles en $C_1$-$C_8$, les alkoxyalkyles en $C_2$-$C_8$, les cycloalkyles en $C_5$-$C_{10}$ et les aryles en $C_6$-$C_{12}$.

Selon un mode de réalisation particulier préféré de l'invention, Z répond à l'une des formules ci-après :

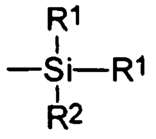 ; 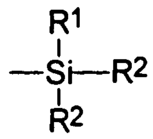 ; 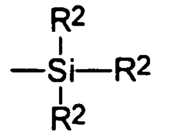 ,

dans lesquelles :

- les radicaux $R^1$, substitués ou non substitués, identiques ou différents entre eux, sont choisis dans le groupe constitué par les alkyles en $C_1$-$C_8$, les cycloalkyles en $C_5$-$C_8$ et les aryles en $C_6$-$C_{12}$ ;
- les radicaux $R^2$, substitués ou non substitués, identiques ou différents entre eux, sont choisis dans le groupe constitué par l'hydroxyle, les alkoxyles en $C_1$-$C_8$ et les cycloalkoxyles en $C_5$-$C_8$.

Plus préférentiellement, dans ces relations :

- les radicaux $R^1$ sont choisis dans le groupe constitué par les alkyles en $C_1$-$C_4$, cyclohexyle et phényle, notamment parmi les alkyles en $C_1$-$C_4$, plus particulièrement parmi méthyle et éthyle ;
- les radicaux $R^2$ sont choisis dans le groupe constitué par l'hydroxyle et les alkoxyles en $C_1$-$C_6$, notamment parmi l'hydroxyle et les alkoxyles en $C_1$-$C_4$, plus particulièrement parmi hydroxyle, méthoxyle et éthoxyle.

Plus préférentiellement encore, les radicaux $R^1$ sont choisis parmi méthyle et éthyle et les radicaux $R^2$ sont choisis parmi hydroxyle, méthoxyle et éthoxyle.

Selon un premier mode de réalisation préférentiel, le comonomère B est choisi dans le groupe constitué par les acrylates et méthacrylates d'hydroxysilyl-alkyl($C_1$-$C_4$), les acrylates et méthacrylates d'alkoxy($C_1$-$C_4$)Silyl-alkyl ($C_1$-$C_4$), et les mélanges de tels monomères. Plus préférentiellement, il est choisi dans le groupe constitué par les acrylates et méthacrylates d'hydroxy-, de méthoxy-, d'éthoxy-silyl-alkyl($C_1$-$C_4$), et les mélanges de tels monomères, notamment parmi les acrylates et méthacrylates d'hydroxy-, de méthoxy-, d'éthoxy-silylpropyle, plus particulièrement parmi acrylate et méthacrylate de triméthoxysilylpropyle.

Selon un second mode de réalisation préférentiel, le comonomère B est choisi dans le groupe constitué par les styryl-alkyl($C_1$-$C_4$)-hydroxysilanes, les styryl-alkyl($C_1$-$C_4$)-alkoxy($C_1$-$C_4$)silanes et les mélanges de tels monomères. Plus préférentiellement, il est choisi dans le groupe constitué par les styryl-alkyl($C_1$-$C_4$)-hydroxy-, méthoxy-, éthoxy-silanes et les mélanges de tels monomères, notamment parmi les styryléthylhydroxysilanes, les styryléthylméthoxysilanes et les styryléthyléthoxysilanes ; on utilise plus particulièrement le styryléthyltriméthoxysilane (ou triméthoxysilyléthylstyrène).

Compte tenu des taux molaires préférentiels indiqués supra pour ce comonomère B porteur de la fonction Z, ce dernier est utilisé selon un taux pondéral qui est préférentiellement supérieur à 10%, plus préférentiellement compris entre 10 et 30%, notamment entre 15 et 30%.

Les comonomères du type B sont bien connus, notamment ceux choisis dans le groupe constitué par le méthacrylate de triméthoxysilylpropyle (en abrégé "MTSP"), l'acrylate de triméthoxysilylpropyle (ou "ATSP") et le triméthoxysilyléthylstyrène (ou "TSES") ou styryléthyl-triméthoxysilane, de formules respectives ci-après :

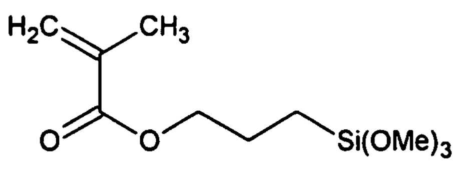

Méthacrylate de triméthoxysilylpropyle ("MTSP" ou "MPS")

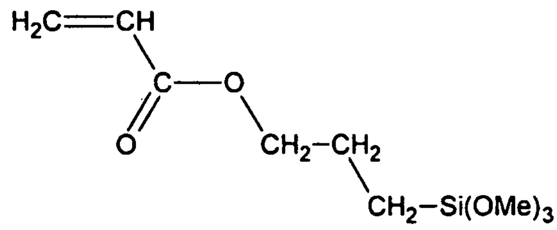

Acrylate de triméthoxysilylpropyle ("ATSP" ou "APS")

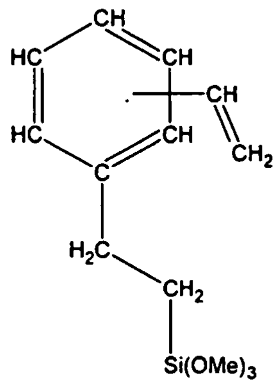

Triméthoxysilyléthylstyrène ("TSES")

Concernant maintenant le monomère A vinylique non aromatique, ce dernier répond de préférence à la formule (II) :

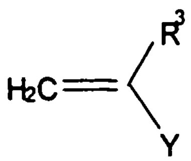

dans laquelle :

o le radical $R^3$ est choisi dans le groupe constitué par l'hydrogène, les alkyles en $C_1$-$C_8$ et les cycloalkyles en $C_5$-$C_8$ ;
o le radical Y est choisi dans le groupe constitué par les halogènes, les radicaux OH, OR', SR', C≡N, C(O)OH, C(O)OR', C(O)N(R'R"), C(O)R' et OC(O)R' dans lesquels R' et R", identiques ou différents, sont choisis dans le groupe constitué par les alkyles, linéaires, ramifiés ou cycliques, comportant de 1 à 12 atomes de carbone, et les aryles, aralkyles ou alkaryles comportant de 6 à 20 atomes de carbone, R' et R" pouvant comporter au moins un hétéroatome choisi parmi les halogènes (de préférence le chlore), l'oxygène, l'azote et le soufre.

A titre d'exemples de tels monomères A peuvent être cités les monomères suivants :

- alcool vinylique (pour le radical hydroxyle Y = OH) ;
- méthyl vinyl éther, éthyl vinyl éther, phényl vinyl éther (pour le radical organoxyle Y=OR');
- méthyl vinyl thioéther, éthyl vinyl thioéther, phényl vinyl thioéther (pour le radical sulfényle Y = SR') ;
- acrylonitrile et méthacrylonitrile (pour le radical cyano Y = C≡N) ;
- acide acrylique et acide méthacrylique (pour le radical carboxyle Y = C(O)OH) ;
- (méth)acrylates de méthyle, de n-butyle, de tert-butyle, d'hydroxyéthyle, de glycidyle (pour le radical oxycarbonyle Y = C(O)OR') ;
- N,N-diméthyl-(méth)acrylamide, N,N-diisopropyl-(méth)acrylamide, N-méthyl,N-isopropylacrylamide (pour le radical carbamoyle Y = C(O)N(R'R") ;

- vinyl méthyl cétone (pour le radical acyle Y = C(O)R') ;
- acétate de vinyle, propanoate de vinyle (pour le radical acyloxy Y = OC(O)R').

De préférence, dans la formule (II) ci-dessus, les caractéristiques suivantes sont vérifiées :

- $R^3$ est choisi dans le groupe constitué par l'hydrogène et les alkyles en $C_1$-$C_6$ ;
- Y est choisi dans le groupe constitué par le chlore, les radicaux C(O)OH, C(O)OR', C(O)N(R'R") et OC(O)R'.

Plus préférentiellement encore, les caractéristiques suivantes son vérifiées :

- Y est le groupe C(O)OR';
- $R^3$ est l'hydrogène ou le méthyle.

A titre d'exemples de monomères A vérifiant les caractéristiques plus préférentielles ci-dessus, on citera particulièrement les monomères acrylates ou méthacrylates de formule (II) dans lesquels Y est C(O)OR' et R' est choisi dans le groupe constitué par les alkyles ayant de 1 à 8 atomes de carbone.

A titre d'exemples de monomères A vérifiant les caractéristiques préférentielles ci-dessus, on citera particulièrement les monomères acrylates ($R^3$ = hydrogène) ou méthacrylates ($R^3$ = méthyle) dans lesquels R' est un alkyle comportant de 1 à 4 atomes de carbone, notamment ceux choisis dans le groupe constitué par l'acrylate de méthyle (R' est le méthyle), le méthacrylate de méthyle (R' est le méthyle), l'acrylate d'éthyle (R' est l'éthyle), le méthacrylate d'éthyle (R' est l'éthyle), l'acrylate de n-butyle (R' est le n-butyle), le méthacrylate de n-butyle (R' est le n-butyle), l'acrylate de tert-butyle (R' est le tert-butyle), le méthacrylate de tert-butyle (R' est le tert-butyle), l'acrylate d'hydroxyéthyle (R' est l'hydroxyéthyle), le méthacrylate d'hydroxyéthyle (R' est l'hydroxyéthyle), et les mélanges de ces composés.

Pour la clarté de l'exposé sont rappelées ci-dessous les formules développées de certains de ces monomères A préférentiels de type monofonctionnels :

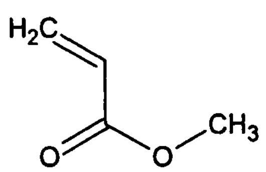

acrylate de méthyle

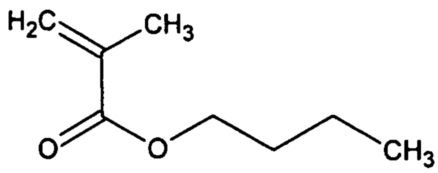

méthacrylate de n-butyle

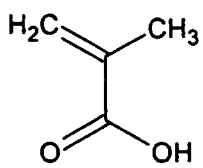

acide méthacrylique

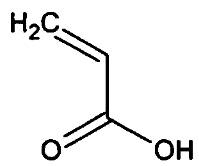

acide acrylique

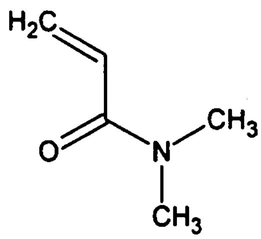

N,N-diméthylacrylamide

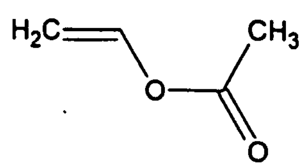

acétate de vinyle

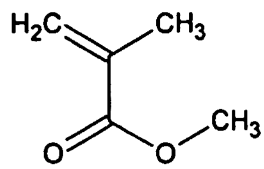

méthacrylate de méthyle

On utilise de préférence l'acrylate de méthyle ou le méthacrylate de méthyle, plus préférentiellement encore le méthacrylate de méthyle (en abrégé "MMA").

A titre d'exemples de monomères A du type bifonctionnels pourraient être utilisés des monomères de formule (II) ci-dessus dans lesquelles le radical Y est porteur d'un second groupe vinyle ou vinylidène copolymérisable par voie radicalaire.

Le PV fonctionnalisé Z se présente en outre dans un état réticulé, c'est-à-dire sous une forme tridimensionnelle, de manière à bien maintenir la morphologie de la charge à haute température.

La réticulation est apportée par au moins un comonomère de départ (monomère C) polymérisable par réaction d'addition et bifonctionnel du point de vue de la polymérisation, c'est-à-dire porteur d'au moins une deuxième fonction susceptible de créer un réseau tridimensionnel de PV lors de la polymérisation. Ce monomère C dit réticulant peut être vinylique ou non vinylique, aromatique ou aliphatique.

Conviennent plus préférentiellement comme comonomère C les comonomères porteurs de deux groupes insaturés, notamment éthyléniques, polymérisables par voie radicalaire, en particulier ceux choisis dans le groupe constitué par les di(méth)acrylates ou tri(méth)acrylates de polyols, notamment de diols ou de triols (par exemple d'éthylène glycol, de propylène glycol, 1,4-butanediol, 1,6-hexanediol, triméthylolpropane), les di(méth)acrylamides d'alkylène (par exemple le bis-acrylamide de méthylène), les composés vinylaromatiques, de préférence styréniques, porteurs d'au moins deux groupements vinyliques (par exemple le diisopropenylbenzène (DIB), le divinylbenzène (DVB), le trivinylbenzène (TVB)), et les mélanges de tels comonomères.

On rappelle ci-dessous les formules développées de certains de ces exemples de monomères C préférentiels :

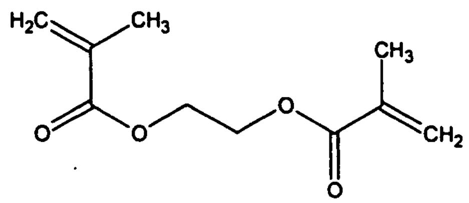

Diméthacrylate d'éthylèneglycol (en abrégé "EGDMA")

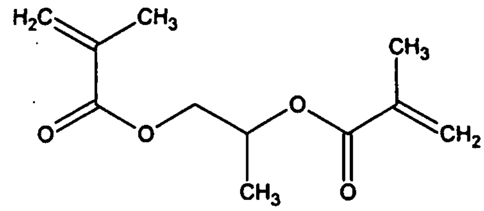

Diméthacrylate de propylène glycol (en abrégé "PGDMA")

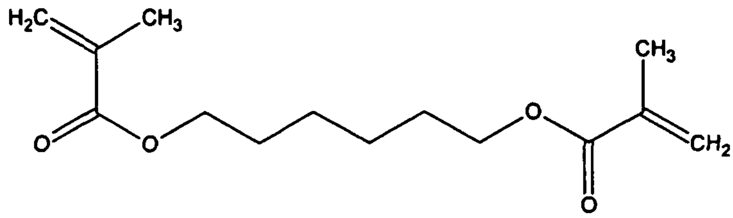

Diméthacrylate d'hexaméthylène glycol (en abrégé "HGDMA")

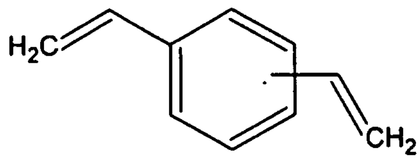

Divinylbenzène (en abrégé "DVB")

Selon un mode de réalisation particulièrement préféré, le PV des nanoparticules de l'invention est un polyacrylate ou polyméthacrylate, ou un copolymère issu de motifs (méth)acrylates selon une fraction pondérale majoritaire (de préférence au moins égale ou supérieure à 50%, plus préférentiellement égale ou supérieure à 70%), par exemple un copolymère choisi dans le groupe constitué par les copolymères MMA-MTSP-EGDMA, MMA-MTSP-PGDMA, MMA-MTSP-HGDMA et MMA-MTSP-DVB.

A titre de comonomère réticulant pourrait être également utilisé le comonomère B porteur de la fonction Z précitée ou le comonomère A, à la condition bien sûr que ce comonomère B ou ce comonomère A soit lui-même au moins bifonctionnel et copolymérisable par voie radicalaire avec les autres comonomères.

Le taux pondéral de comonomère réticulant C est de préférence supérieur à 1%, plus préférentiellement supérieur à 5%, en particulier compris entre 10 et 30%.

Divers autres monomères, comme par exemple des monomères diéniques tels que butadiène, isoprène, pipérylène, peuvent être éventuellement ajoutés à titre minoritaire, de préférence pour moins de 20% en poids total de monomères.

Selon un mode de réalisation particulièrement préférentiel de l'invention, les monomères A, B et C sont différents et sont tous trois vinyliques, en particulier sont tous trois vinyliques non aromatiques.

Selon un autre mode de réalisation particulièrement préférentiel de l'invention, combiné ou non au précédent, les monomères A et B sont porteurs d'une seule fonction polymérisable par voie d'addition, et le monomère C réticulant n'est porteur que de deux fonctions polymérisable par voie radicalaire.

Le PV fonctionnalisé Z et réticulé peut être préparé par tout procédé de synthèse adapté à la fonctionnalisation d'un copolymère vinylique.

De préférence, cette synthèse est conduite par polymérisation radicalaire des différents monomères. Une telle technique est dans son principe général connue, elle a été notamment appliquée à la polymérisation radicalaire en émulsion de polystyrène fonctionnalisé Z (alkoxysilane ou hydroxysilane) en présence de MTSP (voir par exemple Macromolecules 2001, 34, 5737 et Macromolecules 2002, 35, 6185), ou à la synthèse de polystyrène réticulé (mais non fonctionnalisé) en présence de DVB (Polymer 2000, 41, 481).

De préférence, pour la synthèse décrite ci-dessus, le monomère A vinylique non aromatique est un monomère acrylate ou méthacrylate ; le comonomère B fonctionnalisant (porteur de la fonction Z) est choisi préférentiellement dans le groupe constitué par MTSP, ATSP, TSES et les mélanges de ces monomères ; le comonomère C réticulant est lui-même un composé vinylique, choisi préférentiellement dans le groupe constitué par HGDMA, PGDMA, EGDMA, DVB et les mélanges de ces monomères.

Peuvent être ainsi obtenues des nanoparticules de PV fonctionnalisé Z et réticulé, en émulsion dans l'eau c'est-à-dire sous forme de latex (typiquement, par exemple, 100 g de polymère par litre d'eau). On rappelle que par "latex" de polymère, doit être entendu de manière connue un système de colloïde composé d'une suspension ou d'une émulsion de particules de polymère dans un milieu aqueux.

Comme reproduit à la Figure 1, ces nanoparticules de PV caractérisées par MET conformément au paragraphe I-1-A précédent, ces nanoparticules de PV se présentent de préférence sous une forme sensiblement sphérique (donc sous forme de nanobilles), soit à l'état isolé soit en agrégats eux-mêmes éventuellement agglomérés. Le nombre de nanoparticules par agrégat est typiquement compris entre 2 et 100.

Le diamètre moyen de ces nanobilles, mesurable par exemple par MET comme indiqué au paragraphe I-1-A, est de préférence compris entre 10 et 100 nm, plus préférentiellement compris entre 10 et 60 nm, notamment entre 10 et 40 nm.

Les nanoparticules de PV conformes à l'invention précédemment décrites sont avantageusement utilisables pour le renforcement de matrices polymériques, le polymère de ces matrices pouvant être de toute nature, par exemple une matière thermoplastique, une matière thermodurcissable, un élastomère diénique ou non diénique.

Dans ces matrices polymériques, le taux de nanoparticules de PV est de préférence compris entre 10 et 100 parties en poids pour cent parties de polymère. Grâce à la faible densité de ces nanoparticules, ce taux est avantageusement compris entre 10 et 80 parties, de préférence compris entre 20 et 50 pce et plus préférentiellement encore strictement supérieur à 30 pce.

De préférence, la charge PV constitue en outre plus de 80%, plus préférentiellement plus de 90% (% en volume) de la totalité de la charge renforçante, une fraction minoritaire (de préférence moins de 20%, plus préférentiellement moins de 10% en volume) de cette totalité pouvant être constituée par une autre charge renforçante, par exemple une charge inorganique ou du noir de carbone.

Les nanoparticules de PV peuvent avantageusement constituer la totalité de la charge renforçante dans lesdites matrices polymériques.

II-2. Masterbatch de nanoparticule de PV

Les nanoparticules de PV précédemment décrites sont avantageusement incorporées à leur matrice de polymère par l'intermédiaire d'un masterbatch, c'est-à-dire que ces particules sont préalablement mélangées avec au moins un polymère pour faciliter leur incorporation ultérieure à la matrice polymérique finale.

Par "masterbatch" (ou "mélange-maître") doit être entendu de manière connue le mélange d'au moins un polymère (par exemple un élastomère ou un mélange d'élastomères) et une charge renforçante, mélange précurseur de la matrice de polymère finale, prête à l'emploi.

A titre d'exemple, ce masterbatch peut être préparé par un procédé comportant les étapes suivantes :

- partir d'un latex du polymère et d'un latex du PV fonctionnalisé et réticulé ;
- les mélanger intimement ;
- faire précipiter le mélange ainsi obtenu ;
- puis laver et sécher le précipité ainsi obtenu.

Le latex de polymère peut consister en un polymère déjà disponible en émulsion ou par exemple en un polymère initialement en solution qui est émulsifié dans un mélange de solvant organique et d'eau, généralement au moyen d'un agent tensio-actif (le solvant organique disparaissant au moment de la coagulation ou précipitation).

L'opération de mélangeage intime des deux latex est conduite de manière à bien disperser les nanoparticules de PV dans le polymère, homogénéiser l'ensemble pour former un mélange de latex de concentration en matière solide préférentiellement comprise entre 20 et 500 g/l, plus préférentiellement entre 50 et 350 g/l. De préférence, les deux latex de départ sont dilués à l'eau avant mélangeage (par exemple 1 volume d'eau pour 1 volume de latex).

La précipitation du mélange des deux latex peut être réalisée par tout procédé connu de l'homme du métier, par exemple par une action mécanique ou préférentiellement par l'action d'un agent coagulant. L'agent coagulant est tout composé liquide, miscible à l'eau mais non solvant (ou mauvais solvant) du polymère, par exemple une solution aqueuse saline, de préférence un alcool ou un mélange de solvants comportant au moins un alcool (par exemple alcool et eau, alcool et toluène). Plus préférentiellement, l'agent coagulant est un alcool seul tel que méthanol ou isopropanol. La coagulation est conduite préférentiellement sous agitation, à température ambiante, dans un grand volume de coagulant ; typiquement, on utilise sensiblement un volume d'alcool au moins double du volume total cumulé des deux latex dilués. Au cours de cette étape, on préfère verser le mélange des deux latex sur le coagulant, et non l'inverse.

Après lavage et séchage est obtenu le masterbatch se présentant sous forme de "miettes" ("*crumbs*") de polymère, comportant au moins le polymère choisi et les nanoparticules de PV noyées dans la matrice de polymère.

Peuvent être éventuellement incorporés au masterbatch divers additifs, qu'ils soient destinés au masterbatch proprement dit (par exemple un agent de stabilisation, du noir de carbone à titre d'agent colorant et anti-UV, un plastifiant, un antioxydant, etc.) ou à la matrice de polymère finale à laquelle est destiné le masterbatch.

Le polymère du masterbatch peut être tout polymère, identique ou non à celui (ou ceux) de la matrice de polymère finale. Il peut être avantageux d'utiliser le même polymère et d'ajuster le taux de PV dans le masterbatch au taux visé final, de manière à ne pas avoir à ajouter de polymère ultérieurement, au cours de la fabrication de la composition polymérique finale comportant les nanoparticules de l'invention, en tant que charge renforçante, et le polymère ainsi renforcé.

II-3. Utilisation des nanoparticules de PV comme charge renforçante de pneumatique

Les nanoparticules selon l'invention précédemment décrites sont utilisées préférentiellement pour le renforcement de pneumatiques ou de produits semi-finis pour pneumatiques, ces produits semi-finis étant notamment choisis dans le groupe constitué par les bandes de roulement, les sous-couches destinées par exemple à être placées sous ces bandes de roulement, les nappes d'armature de sommet, les flancs, les nappes d'armature de carcasse, les talons, les protecteurs, les chambres à air, les gommes intérieures étanches pour pneu sans chambre, les gommes internes de renforcement de flancs et autres gommes destinées à supporter la charge en cas de roulage à plat des pneumatiques.

Pour la fabrication de tels produits semi-finis, on utilise des compositions de caoutchouc à base d'au moins : (i) un (c'est-à-dire au moins un) élastomère diénique ; (ii) une (c'est-à-dire au moins une) charge PV selon l'invention et (iii) un (c'est-à-dire au moins un) agent de couplage assurant la liaison entre cette charge PV et cet élastomère diénique.

Par l'expression "à base de", il faut entendre une composition comportant le mélange et/ou le produit de réaction des différents constituants de base utilisés, certains de ces constituants pouvant réagir et/ou étant destinés à réagir entre eux, au moins partiellement, lors des différentes phases de fabrication de la composition, ou lors de sa cuisson ultérieure.

Par élastomère ou caoutchouc (les deux termes étant synonymes) du type "diénique", on entend de manière connue un élastomère issu au moins en partie (i.e. un homopolymère ou un copolymère) de monomères diènes (monomères porteurs de deux doubles liaisons carbone-carbone, conjuguées ou non). L'élastomère diénique est choisi préférentiellement dans le groupe des élastomères diéniques fortement insaturés constitué par les polybutadiènes (en abrégé BR), les polyisoprènes (IR), le caoutchouc naturel (NR), les copolymères de butadiène, les copolymères d'isoprène et les mélanges de ces élastomères.

Selon un mode de réalisation particulier, l'élastomère diénique est majoritairement, c'est-à-dire pour plus de 50 pce, un copolymère de styrène-butadiène (SBR), qu'il s'agisse d'un SBR préparé en émulsion ("E-SBR") ou d'un SBR préparé en solution ("S-SBR"), ou un coupage (mélange) SBR/BR, SBR/NR (ou SBR/IR), ou encore BR/NR (ou BR/IR).

Selon un autre mode de réalisation particulier, l'élastomère diénique est majoritairement (pour plus de 50 pce) un élastomère isoprénique, c'est-à-dire un homopolymère ou un copolymère d'isoprène choisi dans le groupe constitué par le caoutchouc naturel (NR), les polyisoprènes de synthèse (IR), les différents copolymères d'isoprène et les mélanges de ces élastomères. Cet élastomère isoprénique est de préférence du caoutchouc naturel ou un polyisoprène cis-1,4 de synthèse ayant un taux de liaisons cis-1,4 supérieur à 90%, plus préférentiellement encore supérieur à 98% (% molaire).

Selon un autre mode de réalisation particulier, notamment lorsque la charge PV est destinée à renforcer un flanc de pneumatique, une gomme intérieure étanche de pneumatique sans chambre (ou autre élément imperméable à l'air), la composition de caoutchouc peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

L'agent de couplage (ou agent de liaison) est destiné à établir une connexion suffisante entre la surface des particules de PV et le polymère auquel ces particules sont destinées, afin que ces dernières puissent assurer pleinement leur fonction de charge renforçante.

Les agents de couplage sont bien connus de l'homme du métier et ont été décrits dans un très grand nombre de documents. On peut utiliser tout agent de couplage susceptible d'assurer efficacement, dans une composition de caoutchouc diénique utilisable pour la fabrication de pneumatiques, la liaison entre une charge inorganique renforçante telle qu'une silice et un élastomère diénique, en particulier des organosilanes ou des polyorganosiloxanes polyfonctionnels.

A titre d'exemples d'organosilanes, on peut citer les polysulfures de bis-(alkoxyl($C_1$-$C_4$)silylalkyl($C_1$-$C_4$)), comme par exemple les polysulfures de bis(3-triméthoxysilylpropyl) ou de bis(3-triéthoxysilylpropyl), notamment le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également comme exemples d'agents de couplage avantageux les polysulfures de bis-(monoalkoxyl($C_1$-$C_4$)-dialkyl($C_1$-$C_4$)silylpropyl), plus particulièrement le tétrasulfure ou disulfure de bis-monoéthoxy-diméthylsilylpropyl. A titre d'exemples d'agents de couplage autres que les alkoxysilanes polysulfurés précités, on citera notamment des polyorganosiloxanes bifonctionnels ou encore des polysulfures d'hydroxysilane.

Le taux d'agent de couplage est de préférence inférieur à 10 pce, plus préférentiellement inférieur à 7 pce, en particulier inférieur à 5 pce.

Bien entendu, les compositions de caoutchouc ci-dessus comportent également tout ou partie des additifs usuels habituellement utilisés dans les compositions d'élastomères destinées à la fabrication de pneumatiques, comme par exemple des plastifiants ou des huiles d'extension, des pigments, des agents de protection tels que cires anti-ozone,

anti-ozonants chimiques, des agents anti-oxydants, des agents anti-fatigue, des résines renforçantes ou plastifiantes, des accepteurs ou des donneurs de méthylène, des activateurs de couplage, des agents de recouvrement, des agents facilitant la processabilité, un système de réticulation à base soit de soufre, soit de donneurs de soufre et/ou de peroxyde et/ou de bismaléimides, des accélérateurs de vulcanisation, des activateurs de vulcanisation.

## III. EXEMPLES DE REALISATION

III-1 Essai 1

Dans les exemples de réalisation qui suivent, deux charges de polyméthacrylate fonctionnalisé (Z) et réticulé sont synthétisées par polymérisation radicalaire de trois monomères différents - méthacrylate de méthyle (MMA), diméthacrylate d'éthylène glycol (EGDMA) et charge A : méthacrylate de triméthoxysilylpropyle (MPST) ou charge B : acrylate de triméthoxysilylpropyle (ATSP)- puis incorporées à une composition de caoutchouc pour pneumatique sous la forme de masterbatchs obtenus par coprécipitation d'un latex de la charge PV et d'un latex d'un élastomère diénique (SBR).
Selon un mode de réalisation particulièrement préféré, le taux pondéral de comonomère B porteur de la fonction Z (ici, MTSP ou ATSP) est compris entre 20 et 30%, celui du comonomère C réticulant (ici EGDMA) est compris entre 10% et 30%.

A. Synthèse des nanoparticules de polyméthacrylate :

Les différents monomères sont préalablement soumis à un barbotage d'azote, ainsi que toutes les solutions aqueuses utilisées à l'exception de la solution de SDS (barbotage à l'état de poudre). La réaction est menée dans un réacteur de 1,5 litres muni d'une agitation mécanique. Après introduction de 840 ml d'eau et un barbotage à l'azote de 30 min sous agitation, sont introduits successivement 50 ml d'une solution aqueuse de dodécylsulfate de sodium (SDS) à 0,9 mol/l à titre d'agent tensioactif, 50 ml à 1 mol/l d'une solution tampon équimolaire d'hydrogéno-phosphate de sodium et de dihydrogénophosphate d'ammonium. A cette solution tamponnée à pH 7, agitée à 350 tr/min et chauffée à 60°C, est ajoutée la charge monomère dans l'ordre qui suit :

Charge A : 48,7 g de MMA (soit une fraction pondérale de 47,1%), 29,1 g de EGDMA (fraction pondérale de 28,1%) puis 25,6 g de MTSP (fraction pondérale de 24,8%).

Charge B : 48,7 g de MMA (soit une fraction pondérale de 47,8%), 29,1 g de EGDMA (fraction pondérale de 28,6%) puis 24,1 g de ATSP (fraction pondérale de 23,7%).

Sous forte agitation (350 tr/min) sont alors ajoutés à l'émulsion résultante 45 ml d'une solution aqueuse de persulfate de potassium (0,125 mol/l). Après 60 min à 60°C sous agitation, 18 ml d'une solution aqueuse d'hydroquinone (0,5 mol/l) sont ajoutés au milieu de polymérisation. Le milieu réactionnel est refroidi avant mélange avec l'élastomère (taux de conversion, mesuré par extrait sec : charge A de 99%; charge B : 94%).
Les polyméthacrylates fonctionnalisés et réticulés ainsi obtenus se présentent sous la forme d'un latex comportant environ 10% en poids de solide (PV) et le complément (environ 90%) en eau.
La caractérisation du latex de charge A est réalisée conformément au paragraphe I-1-A. Le cliché MET reproduit à la Figure 1 montre que les nanoparticules (particules élémentaires) de l'invention se présentent ici sous forme de nanobilles qui ont en majorité un diamètre compris entre 20 et 60 nm. Le diamètre circulaire moyen est égal à 34 nm (écart-type 6 nm).
A ce stade, le polyméthacrylate (charge A) est isolé et séché pour évaluation de son taux de fonctionnalisation (Z) apporté par le monomère MTSP, par dosage du taux de silicium, en procédant comme suit :

- une première étape de solubilisation de l'échantillon en milieu aqueux par calcination puis par fusion alcaline des cendres obtenues ;
- une seconde étape de dosage quantitatif du silicium par spectrométrie d'émission atomique par plasma induit (ICP/AES).

Plus précisément, on opère de la manière suivante : l'échantillon est calciné à 525°C durant 2 heures. La fusion est ensuite conduite sur les cendres obtenues, à 1150°C (± 50°C) avec du tétraborate de lithium (par exemple 2 g pour 1 g de charge calcinée), pendant environ 25 min. Après refroidissement, la totalité de la perle de fusion obtenue est solubilisée à 80°C dans de l'acide chlorhydrique dilué à 2% dans l'eau. La solution est ensuite transférée et ajustée en fiole jaugée.
Le dosage du silicium est alors réalisé, sur le contenu de la fiole jaugée, par ICP/AES : la solution aqueuse

est envoyée dans un plasma d'argon via un système d'introduction, où elle subit les phases de désolvatation, d'atomisation puis d'excitation/ionisation des atomes présents. La raie d'émission du silicium à 251,611 nm est ensuite sélectionnée par le biais d'un monochromateur, puis quantifiée par rapport à une courbe d'étalonnage préparée à partir d'une solution étalon certifiée de l'élément correspondant (l'intensité I de la raie émise étant proportionnelle à la concentration C de l'élément correspondant).

Le résultat est exprimé en % massique de Silicium rapporté à l'échantillon sec (préalablement séché à 105°C durant 2 heures), selon la formule :

$$\% Si = C.V. (100 / M)$$

dans laquelle :

- C = concentration en Si exprimée en mg/l ;
- V = volume de la fiole jaugée en 1 ;
- M = masse de l'échantillon en mg.

Le taux de silicium ainsi mesuré est égal à 2,6% (± 0.2%), donc quasiment égal au taux théorique (soit 2,8%).

La densité des nanoparticules de charge A est mesurée sur la poudre, à l'aide d'un pycnomètre à hélium : la valeur obtenue est égale à 1,25 g/cm$^3$.

B. Préparation du masterbatch :

Les latex de polyméthacrylate sont ensuite incorporés directement à un élastomère diénique SBR pour obtention d'un masterbatch comme indiqué au paragraphe II-2 précédent. Le taux de charge polyméthacrylate visé dans le masterbatch, comme dans la composition de caoutchouc visée finale, est de 39 pce (parties en poids pour cent parties d'élastomère).

Le latex de SBR est préparé de manière connue de l'homme de l'art, dans les conditions suivantes : température de polymérisation : 5°C ; tensioactif : dodécylsulfate de sodium ; amorceur : système redox sel de fer II/hydroperoxyde. La conversion est de l'ordre de 50 à 60%. Le SBR ainsi fabriqué présente les caractéristiques suivantes : viscosité inhérente à 0,1 g/dl dans le toluène à 25°C : 3,11 ; viscosité Mooney (MS) égale à 67 ; Tg (DSC) = -52°C ; microstructure : styrène 23,6%, phase butadiène : vinyl 15,0%, trans 70.1 %, cis 14.9%.

La quantité de matière sèche du latex de SBR est déterminée par pesée, sur extrait sec, avant de préparer le masterbatch. Le latex de SBR est dilué 3 fois à l'eau, soit :

Charge A : 652 ml de latex de SBR à 177,1 g/l (115,4 g de SBR) et 1304 ml d'eau de dilution.

Charge B : 408 ml de latex de SBR à 195,9 g/l (80 g de SBR) et 820 ml d'eau de dilution

Dès les synthèses terminées, les latex de charge polyméthacrylate sont refroidis à température ambiante puis ajoutés aux latex de SBR dilués à raison de 39 pce de charge, soit :

Charge A : 497 ml de latex de charge polyméthacrylate à 90,5 g/l (45 g de charge).

Charge B : 368 ml de latex de charge polyméthacrylate à 84,8 g/l (31,2 g de charge).

Le mélange résultant est homogénéisé doucement. A raison de 100 ml/min, le mélange est alors ajouté sur charge A : 5000 ml; charge B : 3500 ml de méthanol agité à 350 tr/min. Le précipité ainsi obtenu est filtré sur papier filtre, rincé avec de l'eau jusqu'à faible moussage résiduel constant des eaux de lavage et test négatif des eaux de lavage au nitrate d'argent. Le précipité ainsi lavé est séché sous pression réduite sous azote à 60°C pendant 3 à 4 jours. 156 g (charge A) et 107,7 g (charge B) de masterbatch sec sont ainsi récupérés.

C. Préparation des compositions de caoutchouc :

Une composition témoin (charge silice HDS) est préparée de manière conventionnelle, comme suit : dans un mélangeur interne, dont la température initiale de cuve est d'environ 90°C, on introduit tout d'abord ("phase non-productive") l'élastomère SBR préalablement étendu avec 37,5 pce d'huile, ainsi qu'une partie de la charge. Après un temps

approprié de malaxage, de l'ordre de 1 min, on ajoute l'agent de couplage et la partie restante de charge. Les autres ingrédients, à l'exception du système de vulcanisation, sont ajoutés au bout de 2 min. Le mélangeur interne est alors rempli à 75%. On conduit alors un travail thermomécanique d'une durée de 6 min environ, avec une vitesse moyenne des palettes de 70 tours/min, jusqu'à obtenir une température de tombée d'environ 135°C.

On procède de manière identique pour une deuxième et troisième composition incorporant cette fois la charge PV (polyméthacrylate) conforme à l'invention, à la différence près que la charge PV et l'élastomère diénique sont introduits en une seule fois dès le début, sous forme du masterbatch précédemment préparé comportant 39 pce de particules de PV ; puis l'huile d'extension (37,5 pce d'huile TDAE) est incorporée de manière progressive.

Après le travail thermomécanique de malaxage, on récupère le mélange obtenu, on le refroidit puis on ajoute le système de vulcanisation (soufre et accélérateur primaire type sulfénamide) sur un mélangeur externe à 30°C, en mélangeant le tout ("phase productive") pendant un temps approprié (entre 5 et 12 min).

Les compositions ainsi obtenues sont ensuite soit calandrées sous la forme de plaques (épaisseur de 2 à 3 mm) de caoutchouc pour la mesure de leurs propriétés mécaniques, soit extrudées sous la forme d'un produit semi-fini pour pneumatique, par exemple une bande de roulement. La vulcanisation (cuisson) est effectuée à 150°C pendant 40 min, sous pression.

D. Caractérisation des compositions de caoutchouc :

Les compositions de caoutchouc sont caractérisées, avant et après cuisson, comme indiqué ci-après.

Essais de traction :

Ces essais permettent de déterminer les contraintes d'élasticité et les propriétés à la rupture après cuisson. Sauf indication différente, ils sont effectués conformément à la norme française NF T 46-002 de septembre 1988. On mesure en première élongation (i.e., sans cycle d'accommodation) les modules sécants vrais (i.e., calculés en se ramenant à la section réelle de l'éprouvette), exprimés en MPa, à 100% d'allongement (modules notés M100), à 300% d'allongement (M300) et 400% d'allongement (M400). Toutes ces mesures de traction sont effectuées dans les conditions normales de température et d'hygrométrie (23 $\pm$ 2°C ; 50 $\pm$ 5% d'humidité relative).

Rhéométrie :

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983). On mesure la constante de vitesse de conversion K (en $min^{-1}$) d'ordre 1, calculée entre 30% et 80% de conversion, qui permet d'apprécier la cinétique de vulcanisation (plus K est élevée, plus la cinétique est rapide).

Propriétés dynamiques :

Les propriétés dynamiques $\Delta G^*$ et $\tan(\delta)_{max}$ sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation crête-crête de 0,1 à 50% (cycle aller), puis de 50% à 0,1% (cycle retour). Les résultats exploités sont le module complexe de cisaillement dynamique ($G^*$) et le facteur de perte tan $\delta$. Pour le cycle retour, on indique la valeur maximale de tan $\delta$ observée ($\tan(\delta)_{max}$), ainsi que l'écart de module complexe ($\Delta G^*$) entre les valeurs à 0,1 et 50% de déformation (effet Payne).

E. Résultats des tests comparatifs de caoutchouterie :

Le but de l'essai est de comparer les performances des nanoparticules de l'invention à celles de la charge inorganique conventionnelle (silice HDS).

On compare pour cela les trois compositions préparées selon le paragraphe C qui précède, dont la formulation générale est conventionnelle pour des bandes de roulement de pneumatiques à hautes performances, combinant faible résistance au roulement et résistance élevée à l'usure (pneus tourisme à faible consommation d'énergie dits "Pneus Verts"). La silice HDS choisie pour renforcer la composition témoin est une silice de grade pneumatique présentant de manière connue un très haut pouvoir renforçant ("Zeosil" type " 1165MP" de la société Rhodia - densité d'environ 2,1 $g/cm^3$).

Pour la composition témoin, l'élastomère diénique utilisé est le SBR dont la synthèse est décrite au paragraphe III-2, préalablement étendu avec 37,5% d'huile TDAE (soit 37,5 pce d'huile pour 100 pce de SBR sec).

Les trois compositions testées sont strictement identiques à la nature de la charge renforçante près :

- composition C-1 : silice HDS (témoin) ;
- composition C-2 : PV fonctionnalisé MTSP (invention).
- composition C-3 (invention) : PV fonctionnalisé Z (ATSP).

Le taux de charge renforçante a été ajusté à iso-fraction volumique de charge (même volume - soit environ 19% - de charge dans chaque composition). La surface spécifique de la charge polymère étant plus faible, la quantité d'agent de couplage TESPT introduit dans les compositions C-2 et C-3 est donc plus faible.

Dans les compositions C-2 et C-3 (invention), les nanoparticules de PV représentent environ 97% (en volume) de la totalité de la charge renforçante, cette dernière comportant une faible proportion (2 pce) de noir de carbone.

Les tableaux 1 et 2 donnent successivement la formulation des différentes compositions (tableau 1 - taux des différents produits exprimés en pce), leurs propriétés avant et après cuisson à 150°C pendant 40 min (tableau 2).

L'examen des différents résultats du tableau 2 montre pour les compositions C-2 et C-3 renforcée des nanoparticules selon l'invention, comparée à la composition témoin C-1 :

- à l'état cru, une cinétique de vulcanisation (constante K) améliorée ;
- une réduction très sensible de la masse volumique (mesurée à l'aide d'un pycnomètre à hélium), d'environ 16% par rapport à la composition témoin (différence bien sûr maintenue après cuisson) ;
- après cuisson, des valeurs de module équivalentes sous forte déformation (M100, M300, M400), indicateur clair pour l'homme du métier d'un niveau de renforcement élevé, équivalent à celui apporté par la silice HDS de référence ;
- enfin, ce qui n'est pas le moindre, des propriétés d'hystérèse qui, de manière inattendue, sont très sensiblement améliorées comme illustré par une forte diminution des valeurs de $\tan(\delta)_{max}$ et de $\Delta G^*$, ce qui est un indicateur reconnu d'une résistance au roulement et d'un échauffement réduits.

III-2 Essai 2

Dans l'exemple de réalisation qui suit, la charge de polyméthacrylate fonctionnalisé (Z) et réticulé synthétisée au paragraphe III-1-A (charge B) par polymérisation radicalaire de trois monomères différents - méthacrylate de méthyle (MMA), diméthacrylate d'éthylène glycol (EGDMA) et acrylate de triméthoxysilylpropyle (APST) est incorporée à une composition de caoutchouc pour pneumatique sous la forme d'un masterbatch obtenu par coprécipitation du latex de la charge PV et d'un latex de NR.

A. Préparation du masterbatch

Le latex de polyméthacrylate est incorporé directement à du caoutchouc naturel. Le taux de charge polyméthacrylate visé dans le masterbatch est de 39 pce (parties en poids pour cent parties d'élastomère).

La quantité de matière sèche du latex de NR est déterminée par pesée, sur extrait sec, avant de préparer le masterbatch. Le latex de NR est dilué 3 fois à l'eau, soit 447 ml de latex de NR à 178,8 g/l (80 g de NR) et 900 ml d'eau de dilution.

Dès sa synthèse terminée, le latex de charge polyméthacrylate (Charge B synthétisée au paragraphe III-1-A) est refroidi à température ambiante puis ajouté au latex de NR dilué à raison de 39 pce de charge, soit 368 ml de latex de charge polyméthacrylate à 84,8 g/l (31,2 g de charge). Le mélange résultant est homogénéisé doucement. A raison de 100 ml/min, le mélange est alors ajouté sur 3500 ml de méthanol agité à 350 tr/min. Le précipité ainsi obtenu est filtré sur papier filtre, rincé avec de l'eau jusqu'à faible moussage résiduel constant des eaux de lavage et test négatif des eaux de lavage au nitrate d'argent. Le précipité ainsi lavé est séché sous pression réduite sous azote à 60°C pendant 3 à 4 jours. 110 g de masterbatch sec sont ainsi récupérés.

B. Tests de caoutchouterie

Deux compositions de caoutchouc NR sont ensuite préparées comme indiqué précédemment pour l'Essai 1 (température de tombée d'environ 145°C), ces deux compositions différant seulement par la nature de leur charge renforçante, comme suit:

- composition C-4 (témoin) : silice HDS ;
- composition C-5 (invention) : PV fonctionnalisé ATSP.

A titre d'exemples d'application préférentiels, de telles compositions de caoutchouc sont typiquement utilisées dans les parties de systèmes de liaison au sol, notamment de pneumatiques, utilisant habituellement des matrices de caoutchouc à base de NR, comme par exemple les appuis internes de sécurité pour pneumatiques, les flancs, les zones bourrelet des pneumatiques, les sous-couches de bandes de roulement ainsi que les bandes de roulement de ces pneumatiques notamment pour véhicule Poids-lourd.

Le taux de charge renforçante a été ajusté à iso-fraction volumique de charge (même volume - soit environ 17% - de charge dans chaque composition). La surface spécifique de la charge polymère étant plus basse, la quantité d'agent de couplage TESPT introduit dans la composition C-5 est donc nettement plus faible. Dans la composition C-5 de l'invention, la charge PV représente environ 97% (en volume), de la totalité de la charge renforçante, cette dernière comportant une faible proportion (1 pce) de noir de carbone.

Les tableaux 3 et 4 donnent successivement la formulation des différentes compositions (tableau 3 - taux des différents produits exprimés en pce), leurs propriétés avant et après cuisson à 150°C pendant 25 min (tableau 4).

L'examen des différents résultats du tableau 4 montre, pour la composition conforme à l'invention C-5 comparée à la composition témoin C-4 :

- à l'état cru, une sécurité au grillage (Ti) et une cinétique de vulcanisation (constante K) voisines ;
- une réduction très sensible de la masse volumique (-14% environ) ;
- après cuisson, des valeurs plus élevées de module sous très forte déformation (voir valeurs de M600) ce qui montre un niveau de renforcement élevé offert par la charge PV, au moins égal sinon supérieur à celui offert par la silice HDS de référence ;
- enfin et surtout, ce qui confirme largement tous les résultats précédents observés avec un élastomère diénique synthétique (SBR), des propriétés d'hystérèse qui sont cette fois encore fortement améliorées (valeurs de $(\tan(\delta)_{max}$ et de $\Delta G^*$ très sensiblement réduites).

En conclusion, les nanoparticules de PV conformes à l'invention, grâce à leur densité très fortement réduite par rapport à une charge renforçante conventionnelle telle que noir de carbone ou silice HDS, permettent de diminuer de manière très sensible le poids des compositions polymériques.

Cet objectif est atteint non seulement sans dégradation du renforcement, synonyme de résistance à l'usure ou à la fissuration, par rapport à ces charges conventionnelles, mais encore en permettant une réduction notable de l'hystérèse, synonyme d'une résistance au roulement ou d'un échauffement encore améliorés par rapport à une charge inorganique renforçante conventionnelle telle qu'une silice HDS.

Enfin, un avantage remarquable de la charge PV doit être souligné : la masse volumique de la matrice polymérique devenant sensiblement égale à celle de la charge PV elle-même, il devient ainsi possible d'augmenter le taux de charge renforçante sans augmenter la densité de ladite matrice polymérique.

Les nanoparticules de l'invention sont avantageusement utilisables comme charge renforçante de tout type de matrice polymérique, que les polymères soient notamment thermoplastiques, thermodurcissables, ou encore des élastomères (à titre d'exemples des polyamides, polyesters, polyoléfines telles que polypropylène, polyéthylène, PVC, polycarbonates, polyacryliques, résines époxy, polysiloxanes, polyuréthanes, élastomères diéniques).

**Tableau 1**

| Composition N°: | C-1 | C-2 | C-3 |
|---|---|---|---|
| SBR (1) | 100 | 100 | 100 |
| silice HDS (2) | 77 | - | - |
| charge PV (3) | - | 39 | - |
| charge PV (8) | - | - | 39 |
| agent de couplage (4) | 6.2 | 1.8 | 1.8 |
| noir de carbone (N234) | 2 | 2 | 2 |
| huile (5) | 37.5 | 37.5 | 37.5 |
| ZnO | 2.5 | 2.5 | 2.5 |
| acide stéarique | 2 | 2 | 2 |
| antioxydant (6) | 1.9 | 1.9 | 1.9 |
| soufre | 1.5 | 1.5 | 1.5 |

(suite)

| Composition N°: | C-1 | C-2 | C-3 |
|---|---|---|---|
| accélérateur (7) | 2.5 | 2.5 | 2.5 |

(1) Elastomère SBR (synthèse décrite au paragraphe III-B) ;
(2) silice HDS ("Zeosil" type "1165MP" de la société Rhodia) ;
(3) PV fonctionnalisé Z (synthèse selon paragraphe III-A : charge A) ;
(4) TESPT ("Si69" de la société Degussa) ;
(5) huile d'extension TDAE ("Vivatec 500" de la société Klaus Dahleke) ;
(6) N-1,3 diméthylbutyl N-phénylparaphénylènediamine ("Santoflex 6-PPD" de la société Flexsys) ;
(7) N-cyclohexyl-2-benzothiazylsulfénamide ("Santocure CBS" de la société Flexsys).
(8) PV fonctionnalisé Z (synthèse selon paragraphe III-A : Charge B) ;

**Tableau 2**

| Composition N°: | C-1 | C-2 | C-3 |
|---|---|---|---|
| *Propriétés avant cuisson :* | | | |
| K ($min^{-1}$) | 0,105 | 0,151 | 0.217 |
| masse volumique ($g/cm^3$) | 1.19 | 1.01 | 1.02 |
| *Propriétés après cuisson:* | | | |
| M100 (MPa) | 3.5 | 3.5 | 4.8 |
| M300 (MPa) | 11.1 | 10.6 | 13.3 |
| M400 (MPa) | 17.0 | 17.0 | 18.8 |
| $\Delta G^*$ | 5.6 | 0.8 | 1.2 |
| $\tan(\delta)_{max}$ | 0.300 | 0.185 | 0.187 |

**Tableau 3**

| Composition N°: | C-4 | C-5 |
|---|---|---|
| NR(1) | 100 | 100 |
| silice HDS (2) | 50 | - |
| charge PV (3) | - | 25.7 |
| noir de carbone (N234) | 1 | 1 |
| agent de couplage (4) | 4 | 1.16 |
| ZnO | 3 | 3 |
| acide stéarique | 2.5 | 2.5 |
| antioxydant (5) | 1.5 | 1.5 |
| soufre | 1.5 | 1.5 |

(suite)

| Composition N°: | C-4 | C-5 |
|---|---|---|
| accélérateur (6) | 1.8 | 1.8 |

(1) caoutchouc naturel ;
(2) silice HDS ("Zeosil" type "1165MP" de la société Rhodia) ;
(3) PVNA fonctionnalisé ATSP (synthétisée selon paragraphe III-1-A, charge B);
(4) TESPT ("Si69" de la société Degussa) ;
(5) N-1,3 diméthylbutyl N-phénylparaphénylènediamine ("Santoflex 6-PPD" de la société Flexsys) ;
(6) N-cyclohexyl-2-benzothiazylsulfénamide ("Santocure CBS" de la société Flexsys)..

**Tableau 4**

| Composition N°: | C-4 | C-5 |
|---|---|---|
| *Propriétés avant cuisson :* | | |
| K ($min^{-1}$) | 0.327 | 0.307 |
| masse volumique ($g/cm^3$) | 1.16 | 1.00 |
| *Propriétés après cuisson:* | | |
| M100 (MPa) | 3.9 | 4.8 |
| M300 (MPa) | 13.2 | 13.0 |
| M400 (MPa) | 19.1 | 19.9 |
| M600 (MPa) | 25.8 | 28.8 |
| $\Delta G^*$ | 2.51 | 1.31 |
| $tan(\delta)_{max}$ | 0.199 | 0.144 |

## Revendications

**1.** Nanoparticules de polymère vinylique fonctionnalisé et réticulé, utilisables notamment comme charge renforçante dans une matrice polymérique, **caractérisées en ce que** ledit polymère vinylique est un copolymère d'au moins les monomères suivants, tous copolymérisables par polymérisation par voie radicalaire :

- un monomère "A" vinylique non aromatique ;
- un monomère "B" porteur d'une fonction notée Z de formule $\equiv$ Si - X, X représentant un groupe hydroxyle ou hydrolysable ;
- un monomère "C" réticulant c'est-à-dire au moins bifonctionnel du point de vue de ladite polymérisation.

**2.** Nanoparticules selon la revendication 1, X étant un halogène.

**3.** Nanoparticules selon la revendication 1, X répondant à la formule OR dans laquelle R représente l'hydrogène ou un groupe hydrocarboné monovalent, linéaire ou ramifié.

**4.** Nanoparticules selon la revendication 3, Z répondant à l'une des formules :

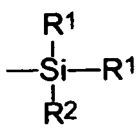 ; 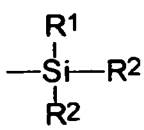 ; 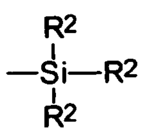 ,

dans lesquelles :

- les radicaux $R^1$, substitués ou non substitués, identiques ou différents entre eux, sont choisis dans le groupe constitué par les alkyles en $C_1$-$C_8$, les cycloalkyles en $C_5$-$C_8$ et les aryles en $C_6$-$C_{12}$ ;
- les radicaux $R^2$, substitués ou non substitués, identiques ou différents entre eux, sont choisis dans le groupe constitué par l'hydroxyle, les alkoxyles en $C_1$-$C_8$ et les cycloalkoxyles en $C_5$-$C_8$.

**5.** Nanoparticules selon l'une quelconque des revendications 1 à 4, le monomère A étant porteur d'une ou plusieurs, de préférence une seule fonction(s) polymérisable(s) par voie radicalaire.

**6.** Nanoparticules selon la revendication 5, le monomère A répondant à la formule (II) :

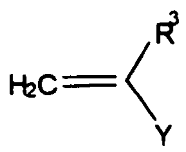

dans laquelle :

- le radical $R^3$ est choisi dans le groupe constitué par l'hydrogène, les alkyles en $C_1$-$C_8$ et les cycloalkyles en $C_5$-$C_8$ ;
- le radical Y est choisi dans le groupe constitué par les halogènes, les radicaux OH, OR', SR', C≡N, C(O)OH, C(O)OR', C(O)N(R'R"), C(O)R' et OC(O)R' dans lesquels R' et R", identiques ou différents, sont choisis dans le groupe constitué par les alkyles comportant de 1 à 12 atomes de carbone, et les aryles, aralkyles ou alkaryles comportant de 6 à 20 atomes de carbone.

**7.** Nanoparticules selon l'une quelconque des revendications 1 à 6, le monomère B étant choisi dans le groupe constitué par les acrylates d'hydroxysilyl-alkyl($C_1$-$C_4$), les méthacrylates d'hydroxysilyl-alkyl($C_1$-$C_4$), les acrylates d'alkoxy($C_1$-$C_4$)silyl-alkyl($C_1$-$C_4$), les méthacrylates d'alkoxy($C_1$-$C_4$)silyl-alkyl($C_1$-$C_4$) et les mélanges de ces composés.

**8.** Nanoparticules selon l'une quelconque des revendications 1 à 6, le comonomère B étant choisi dans le groupe constitué par les styryl-alkyl($C_1$-$C_4$)-hydroxysilanes, les styryl-alkyl($C_1$-$C_4$)-alkoxy($C_1$-$C_4$)silanes et les mélanges de ces composés.

**9.** Nanoparticules selon l'une quelconque des revendications 1 à 8, le comonomère C étant porteur d'au moins deux groupes insaturés polymérisables.

**10.** Nanoparticules selon l'une quelconque des revendications 1 à 9, le polymère vinylique étant obtenu par polymérisation par voie radicalaire.

**11.** Nanoparticules selon l'une quelconque des revendications 1 à 10, le comonomère C étant choisi dans le groupe constitué par les les diacrylates de polyols, les triacrylates de polyols, les diméthacrylates de polyols, les triméthacrylates de polyols, les diacrylamides d'alkylène, les diméthacrylamides d'alkylène, les composés vinylaromatiques porteurs d'au moins deux groupements vinyliques, et les mélanges de ces composés.

**12.** Nanoparticules selon l'une quelconque des revendications 1 à 11, le diamètre moyen des nanoparticules étant compris entre 10 et 100 nm.

**13.** Nanoparticules selon l'une quelconque des revendications 1 à 12, le polymère vinylique étant un copolymère de méthacrylate de méthyle (monomère A), méthacrylate de triméthoxysilylpropyle (monomère B) et diméthacrylate d'éthylène glycol (monomère C).

**14.** Utilisation de nanoparticules selon l'une quelconque des revendications 1 à 13 pour le renforcement d'une matrice polymérique.

**15.** Utilisation selon la revendication 14, le polymère de la matrice polymérique étant un élastomère.

**16.** Utilisation selon la revendication 14, pour le renforcement de pneumatiques.

**17.** Masterbatch comportant des nanoparticules selon l'une quelconque des revendications 1 à 13, noyées dans une matrice polymérique.

**18.** Composition polymérique comportant au moins un polymère, des nanoparticules selon l'une quelconque des revendications 1 à 13, et un agent de couplage assurant la liaison entre le polymère et la surface des nanoparticules.

## Claims

**1.** Nanoparticles of functionalized, cross-linked vinyl polymer, usable in particular as reinforcing filler in a polymeric matrix, **characterized in that** said vinyl polymer is a copolymer of at least the following monomers, which are all copolymerizable by free-radical polymerization:

- a non-aromatic vinyl monomer "A":
- a monomer "B" bearing a function Z of formula Si - X, X representing a hydroxyl or hydrolysable group;
- a cross-linking monomer "C", that is to say one which is at least bifunctional from the point of view of said polymerization.

**2.** Nanoparticles according to Claim 1, X being a halogen.

**3.** Nanoparticles according to Claim 1, X corresponding to the formula OR in which R represents hydrogen or a straight-chain or branched monovalent hydrocarbon group.

**4.** Nanoparticles according to Claim 3, Z corresponding to one of the formulae:

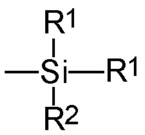 ; 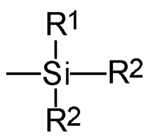 ; 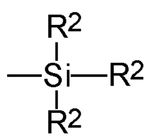 ,

in which:

- the radicals R1, which may or may not be substituted, and which may be identical or different, are selected from the group consisting of C1-C8 alkyls, C5-C8 cycloalkyls and C6-C12 aryls;
- the radicals R2, which may or may not be substituted, and which may be identical or different, are selected from the group consisting of hydroxyl, C1-C8 alkoxyls and C5-C8 cycloalkoxyls.

**5.** Nanoparticles according to any one of Claims 1 to 4, the monomer A bearing one or more, preferably a single, function(s) polymerizable by free-radical polymerization.

**6.** Nanoparticles according to Claim 5, the monomer A corresponding to Formula (II):

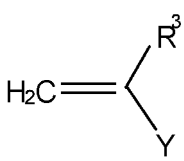

in which:

- the radical R3 is selected from the group consisting of hydrogen, C1-C8 alkyls and C5-C8 cycloalkyls;
- the radical Y is selected from the group consisting of halogens, the radicals OH, OR', SR', C=N, C(O)OH, C(O)OR', C(O)N(R'R"), C(O)R' and OC(O)R' in which R' and R", which may be identical or different, are selected from the group consisting of alkyls comprising from 1 to 12 carbon atoms, and aryls, aralkyls or alkaryls comprising

from 6 to 20 carbon atoms.

**7.** Nanoparticles according to any one of Claims 1 to 6, the monomer B being selected from the group consisting of hydroxysilyl-(C1-C4) alkyl acrylates, hydroxysilyl-(C1-C4) alkyl methacrylates, (C1-C4) alkoxysilyl-(C1-C4) alkyl acrylates, (C1-C4) alkoxysilyl-(C1-C4) alkyl methacrylates and mixs of these compounds.

**8.** Nanoparticles according to any one of Claims 1 to 6, the comonomer B being selected from the group consisting of styryl-(C1-C4) alkyl-hydroxysilanes, styryl-(C1-C4) alkyl-(C1-C4) alkoxysilanes and mixes of these compounds.

**9.** Nanoparticles according to any one of Claims 1 to 8, the comonomerC bearing at least two polymerizable unsaturated groups.

**10.** Nanoparticles according to any one of Claims 1 to 9, the vinyl polymer being obtained by free-radical polymerization.

**11.** Nanoparticles according to any one of Claims 1 to 10, the comonomer C being selected from the group consisting of polyoldiacrylates, polyoltriacrylates, polyoldimethacrylates, polyoltrimethacrylates, alkylenediacrylamides, alkylenedimethacrylamides, vinyl aromatic compounds bearing at least two vinyl groups, and mixes of these compounds.

**12.** Nanoparticles according to any one of Claims 1 to 11, the average diameter of the nanoparticles being between 10 and 100 nm.

**13.** Nanoparticles according to any one of Claims 1to 12, the vinyl polymer being a copolymer of methyl methacrylate (monomer A), trimethoxysilylpropyl methacrylate (monomer B) and ethylene glycol dimethacrylate (monomer C).

**14.** The use of nanoparticles according to any one of Claims 1 to 13for reinforcing a polymeric matrix.

**15.** The use according to Claim 14, the polymer of the polymeric matrix being an elastomer.

**16.** The use according to Claim 15, for the reinforcement of tyres.

**17.** A masterbatch comprising nanoparticles according to any one of Claims 1 to 13, embedded in a polymeric matrix.

**18.** A polymeric composition comprising at least one polymer, nanoparticles according to any one of Claims 1 to 13, and a coupling agent providing the bond between the polymer and the surface of the nanoparticles.

## Patentansprüche

**1.** Funktionalisierte und vernetzte Vinylpolymer-Nanopartikel, insbesondere einsetzbar als verstärkender Füllstoff in einer Polymermatrix, **dadurch gekennzeichnet, dass** das Vinylpolymer ein Copolymer wenigstens der folgenden Monomere ist, welche jeweils mittels radikalischer Polymerisation copolymerisierbar sind:

- ein nicht-aromatisches Vinylmonomer "A";
- ein Monomer "B", das eine mit Z bezeichnete Funktion mit der Formel ≡Si-X trägt, wobei X eine Hydroxylgruppe oder eine hydrolysierbare Gruppe darstellt;
- ein vernetzendes Monomer "C", d.h. ein Monomer, das im Hinblick auf die Polymerisation wenigstens zwei funktionelle Gruppen trägt.

**2.** Nanopartikel nach Anspruch 1, wobei X ein Halogen ist.

**3.** Nanopartikel nach Anspruch 1, wobei X die Formel OR aufweist, in der R Wasserstoff oder eine monovalente, geradkettige oder verzweigte Kohlenwasserstoffgruppe darstellt.

**4.** Nanopartikel nach Anspruch 3, wobei Z eine der Formeln:

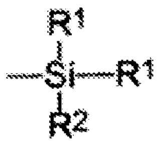 ; 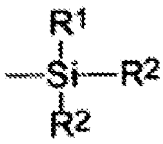 ; 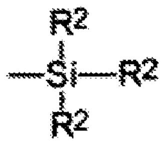 ,

aufweist, in denen:

- die Reste $R^1$, die substituiert oder nicht substituiert, identisch oder voneinander verschieden sind, ausgewählt sind aus der Gruppe, bestehend aus $C_1$-$C_8$-Alkylen, $C_5$-$C_8$-Cycloalkylen und $C_6$-$C_{12}$-Arylen;
- die Reste $R^2$, die substituiert oder nicht substituiert, identisch oder voneinander verschieden sind, ausgewählt sind aus der Gruppe, bestehend aus Hydroxyl, $C_1$-$C_8$-Alkoxylen und $C_5$-$C_8$-Cycloalkoxylen.

**5.** Nanopartikel nach einem der Ansprüche 1 bis 4, wobei das Monomer A eine oder mehrere, vorzugsweise eine einzige, radikalisch polymerisierbare Funktion(en) trägt.

**6.** Nanopartikel nach Anspruch 5, wobei das Monomer A die Formel (II):

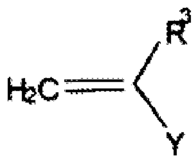

aufweist, in der:

- der Rest $R^3$ ausgewählt ist aus der Gruppe, bestehend aus Wasserstoff, $C_1$-$C_8$-Alkylen und $C_5$-$C_8$-Cycloalkylen;
- der Rest Y ausgewählt ist aus der Gruppe, bestehend aus Halogenen, OH-, OR'-, SR'-, C≡N-, C(O)OH-, C(O)OR'-, C(O)N(R'R")-, C(O)R'- und OC(O)R'-Resten, in denen R' und R", die identisch oder verschieden sind, ausgewählt sind aus der Gruppe, bestehend aus Alkylen, die 1 bis 12 Kohlenstoffatome tragen', und Arylen, Aralkylen oder Alkarylen, die 6 bis 20 Kohlenstoffatome tragen.

**7.** Nanopartikel nach einem der Ansprüche 1 bis 6, wobei das Monomer B ausgewählt ist aus der Gruppe, bestehend aus Hydroxysilylalkyl($C_1$-$C_4$)acrylaten, Hydroxysilylalkyl($C_1$-$C_4$)methacrylaten, Alkoxy($C_1$-$C_4$) silylalkyl ($C_1$-$C_4$)acrylaten, Alkoxy($C_1$-$C_4$) silylalkyl ($C_1$-$C_4$)methacrylaten und Mischungen dieser Verbindungen.

**8.** Nanopartikel nach einem der Ansprüche 1 bis 6, wobei das Comonomer B ausgewählt ist aus der Gruppe, bestehend aus Styrolalkyl($C_1$-$C_4$)hydroxysilanen, Styrolalkyl ($C_1$-$C_4$) alkoxy($C_1$-$C_4$)silanen und Mischungen dieser Verbindungen.

**9.** Nanopartikel nach einem der Ansprüche 1 bis 8, wobei das Comonomer C wenigstens zwei ungesättigte polymerisierbare Gruppen trägt.

**10.** Nanopartikel nach einem der Ansprüche 1 bis 9, wobei das Vinylpolymer durch radikalische Polymerisation erhalten wurde.

**11.** Nanopartikel nach einem der Ansprüche 1 bis 10, wobei das Comonomer C ausgewählt ist aus der Gruppe, bestehend aus Polyoldiacrylaten, Polyoltriacrylaten, Polyoldimethacrylaten, Polyoltrimethacrylaten, Alkylendiacrylamiden, Alkylendimethacrylamiden, vinylaromatischen Verbindungen, die wenigstens zwei Vinylgruppen tragen, und Mischungen dieser Verbindungen.

**12.** Nanopartikel nach einem der Ansprüche 1 bis 11, wobei der mittlere Durchmesser der Nanopartikel von 10 bis 100 nm beträgt.

**13.** Nanopartikel nach einem der Ansprüche 1 bis 12, wobei das Vinylpolymer ein Copolymer aus Methylmethacrylat (Monomer A), Trimethoxysilylpropylmethacrylat (Monomer B) und Ethylenglykoldimethacrylat (Monomer C) ist.

**14.** Verwendung von Nanopartikeln gemäß einem der Ansprüche 1 bis 13 zur Verstärkung einer Polymermatrix.

**15.** Verwendung nach Anspruch 14, wobei das Polymer der Polymermatrix ein Elastomer ist.

**16.** Verwendung nach Anspruch 14 zur Verstärkung von Reifen.

**17.** Masterbatch, enthaltend Nanopartikel gemäß einem der Ansprüche 1 bis 13, welche in einer Polymermatrix eingebettet sind.

**18.** Polymerzusammensetzung, enthaltend wenigstens ein Polymer, Nanopartikel gemäß einem der Ansprüche 1 bis 13 und ein Kopplungsmittel, welches eine Verbindung zwischen dem Polymer und der Oberfläche der Nanopartikel sicherstellt.

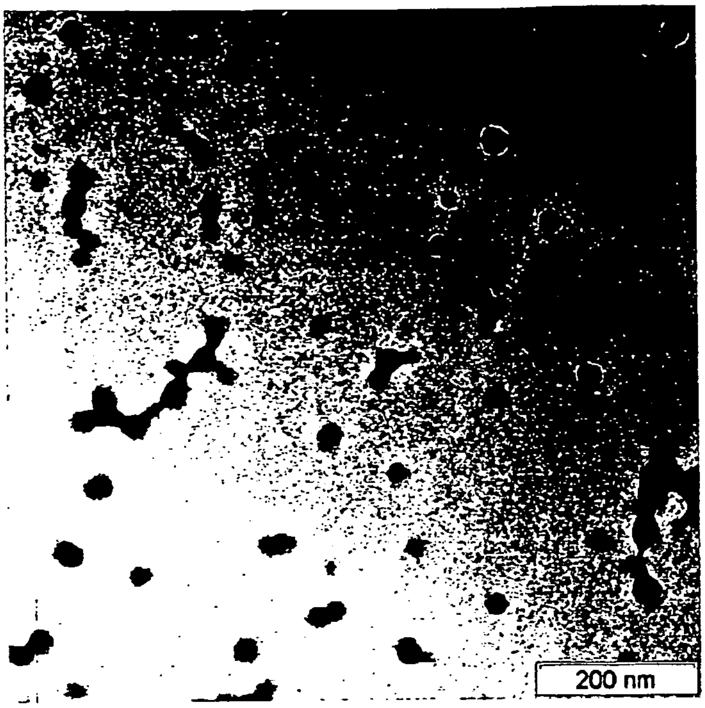


Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **L. C. SAWYER ; DAVID GRUBB.** Polymer Microscopy. Chapman and Hall, 1987, 97-98
- *Macromolecules,* 2001, vol. 34, 5737
- *Macromolecules,* 2002, vol. 35, 6185
- *Polymer,* 2000, vol. 41, 481